# EUROPÄISCHE PATENTANMELDUNG

(11) **EP 0 895 065 A1**
(43) Veröffentlichungstag der Anmeldung: **03.02.1999**
(21) Anmeldenummer: 98112130.4
(22) Anmeldetag: 01.07.1998
(51) Int. Cl.: G01D 7/02

(54) **Verfahren zur Erfassung, Auswertung und Darstellung von Messwerten**

(30) Priorität: 31.07.1997 DE 19733001
(71) Anmelder: Volkswagen Aktiengesellschaft, 38436 Wolfsburg (DE)
(72) Erfinder: Hütterer, Ralf, 38554 Weyhausen (DE)

(57) **Zusammenfassung**

Die Erfindung betrifft ein Verfahren zur Erfassung, Auswertung und Darstellung von Meßwerten, insbesondere zur geometrischen Vermessung von Fahrzeug-Karosseriebauteilen, sowie einen ein entsprechendes Steuerprogramm enthaltenden Datenträger.

Analoganzeigen zur Darstellung von aufgenommenen Meßwerten 4 haben bekanntermaßen den Vorteil, daß sie für einen Betrachter schnell erfaßbar sind, da sie den menschlichen Sehgewohnheiten entgegenkommen. Andererseits sind alphanumerische Anzeigen exakt, eindeutig und paralaxenfrei abzulesen. Das erfindungsgemäße Verfahren soll die Vorteile beider Anzeigearten kombinieren, ohne daß dadurch ein erhöhter Platzbedarf für die Darstellung der aufgenommenen, anzuzeigenden Meßwerte 4 auftritt.

Erfindungsgemäß werden die Meßwerte 4 aufgenommen und mittels einer Datenverarbeitungeinrichtung mit zugeordneten gespeicherten Sollwerten 6 verglichen, anhand des Vergleiches wird jeweils ein Vergleichswert 7 gebildet, der ein Maß für die Abweichung des jeweiligen Meßwertes 4 vom Sollwert 6 ist, und die Meßwerte 4 und/oder die Vergleichswerte 7 werden in alphanumerischer Form dargestellt, wobei der alphanumerischen Darstellung eines Meßwertes 4 und/oder eines Vergleichswertes 7 jeweils ein Farbwert in der Darstellung zugeordnet wird, der jeweils in Abhängigkeit von dem festgestellten Vergleichswert 7 gewählt wird.

## Beschreibung

Die vorliegende Erfindung betrifft ein Verfahren zur Erfassung, Auswertung und Darstellung von Meßwerten, insbesondere zur geometrischen Vermessung von Fahrzeug-Karosseriebauteilen, sowie einen ein entsprechendes Steuerprogramm enthaltenden Datenträger.

Bei vielfältigen Vorgängen in Forschung, Entwicklung und Produktion fallen Meßwerte von zu vermessenden Objekten bzw. zu verfolgenden Prozessen in großer Anzahl an. Es ist bekannt, diese Meßwerte mittels Meßinstrumenten aufzunehmen und beispielsweise mittels zugeordneter analoger Anzeigeeinrichtungen anzuzeigen, bei denen ein tolerabler Meßwertebereich auf einem grün eingefärbten Bereich einer Anzeigeskala angezeigt wird, während Meßwerte, die nicht mehr innerhalb dieser tolerablen Grenze liegen, auf einem gelb oder rot gefärbten Anzeigebereich der Analogskala angezeigt werden.

Zur genauen Identifikation und Bewertung der Meßwerte ist es aber vorteilhatt, die Meßwerte nicht nur auf einer Analogskala anzuzeigen, sondern sie auch in alphanumerischer Form ablesbar zu machen. Bei herkömmlichen Anlagensteuerungen und Prozeßwarten ergibt sich dadurch das Problem, daß einerseits für die leicht erfaßbare, den menschlichen Sehgewohnheiten entgegenkommende analoge Darstellung des Meßwertes auf einer Analogskala bereits ein hoher Platzbedarf für die Anzeigen benötigt wird, dem andererseits durch die zusätzliche alphanumerische Darstellung des Meßwertes - den man aus Gründen der Eindeutigkeit und Fehlersicherheit zusätzlich anstrebt - sogar noch ein darüber hinausgehender Platzbedarf folgt. Wählt man aber nur eine dieser beiden Darstellungsarten der gemessenen Meßwerte, so hat man bei einer ausschließlich analogen Anzeige mit den bekannten Unsicherheiten und Ungenauigkeiten einer analogen Anzeige zu rechnen, während bei einer rein alphanumerischen Darstellung der Meßwerte z.B. mittels LCD-Anzeigen Meßwerte, Meßwerttrends und Grenzwertüberschreitungen für menschliche Erkennungsgewohnheiten nur schlecht 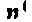 auf die Schnelle" zu erfassen sind.

Es besteht daher die Aufgabe, die typischen Vorteile anloger Anzeigen - nämlich ihre für Menschen schnelle Erfaßbarkeit - und alphanumerischer Anzeigen - nämlich ihre exakte, eindeutige und parallaxenfreie Ablesung - zu kombinieren, ohne daß dadurch ein erhöhter Platzbedarf für die Darstellung der Meßwerte auftritt.

Die Aufgabe wird durch ein Verfahren zur Erfassung, Auswertung und Darstellung von Meßwerten, insbesondere zur geometrischen Vermessung von Fahrzeug-Karosseriebauteilen, mit den Merkmalen des Anspruchs 1 und einen ein entsprechendes Steuerprogramm für eine Datenverarbeitungseinrichtung enthaltenden Datenträger mit den Merkmalen des Anspruchs 15 gelöst.

Durch die Zuordnung eines Farbwertes für die alphanumerische Darstellung eines Meßwertes und/oder eines Vergleichswertes wird erreicht, daß einerseits der exakte, eindeutige und wohldefinierte alphanumerische Wert des Meßwertes und/oder Vergleichswertes dem Betrachter zur Verfügung steht, während der Betrachter andererseits durch die jeweils gewählte Farbe leicht und sicher mit einem Blick feststellen kann, wie groß der Vergleichswert ist, d.h. um wieviel der jeweilige Meßwert vom Sollwert abweicht. Als Vergleichswert bietet sich die Differenz zwischen dem Sollwert und dem Meßwert an; es ist aber z.B. auch möglich, das Verhältnis zwischen dem Sollwert und dem Meßwert als Vergleichswert zu nutzen. Es wird bevorzugt, daß die Zuordnung des Farbwertes in der alphanumerischen Darstellung dadurch geschieht, daß die alphanumerische Darstellung des Meßwertes und/oder des Vergleichswertes ganz oder teilweise mit der zugeordneten Farbe flächig unterlegt wird.

Unter Farbe im Sinne der vorliegenden Anmeldung wird jede Eigenschaft des optischen Erscheinungsbildes bzw. der Oberflächenstruktur eines betrachteten Flächenelements verstanden, die geeignet ist, einer betrachtenden Person einen Sinneseindruck zu liefern, der geeignet ist, dieses Flächenelement von einem Flächenelement einer anderen Farbe zu unterscheiden. Unter Farbe im Sinne der vorliegenden Anmeldung wird daher nicht nur der umgangssprachliche Farbenbegriff wie Rot, Blau, Grün usw., sondern unter anderem auch der Eindruck Hell bzw. Dunkel, unterschiedliche Grautöne oder unterschiedliche Muster auf dem betrachteten Flächenelement verstanden. Besonders bevorzugt wird allerdings, daß der zugeordnete Farbwert eine Farbe im umgangssprachlichen Sinne ist.

In Weiterbildung der Erfindung wird bevorzugt, daß der alphanumerischen Darstellung eines Meßwertes und/oder eines Vergleichswertes, der innerhalb eines vorgegebenen gespeicherten Toleranzbereiches um den zugeordneten Sollwert liegt, ein bestimmter Farbwert in der Darstellung zugeordnet wird und der alphanumerischen Darstellung eines Meßwertes und/oder eines Vergleichswertes, der außerhalb dieses vorgegebenen Toleranzbereichs um den Sollwert liegt, ein oder mehrere andere abweichende Farbwerte in der Darstellung zugeordnet werden.

Das erfindungsgemäße Verfahren läßt sich besonders vorteilhaft rechnergesteuert realisieren, wobei unter Rechnersteuerung die Meßwerte aufgenommen werden, mit im Rechner gespeicherten zugeordneten Sollwerten verglichen werden, im Rechner Vergleichswerte gebildet werden und die alphanumerischen Meßwerte und/oder Vergleichswerte mit einem zugeordneten Farbwert auf einem Ausgabemedium, z. B. einem Rechnerbildschirm dargestellt werden. Die Darstellung auf einem Rechnerbildschirm ermöglicht die gleichzeitige Darstellung mehrerer bis vieler Meßwerte und/oder Vergleichswerte. Gruppen von Meßwerten, insbesondere die einer gemeinsamen Meßstelle am Fahrzeug-Karosseriebauteil zugeordneten Meßwerte, können gegebenenfalls gemeinsam mit den zugeordneten Vergleichswerten zusammengefaßt dargestellt werden, z.B. als Tabellenblock. Bei einer Darstellung auf einem Bildschirm eines Rechners können ferner das Objekt bzw. der Prozeß, dem die aufgenommenen Meßwerte zugehörig sind, gleichzeitig mit der alphanumerischen Darstellung der Meßwerte und/oder der Vergleichswerte auf dem Bildschirm (zumindest symbolisch) graphisch dargestellt werden. Die Zuordnung der verschiedenen Meßwerte bzw. Vergleichswerte - z.B. zu einer gemeinsamen Meßstelle an einem Karosseriebauteil - ist dann für den Betrachter anhand des gleichzeitig dargestellten Karosseriebauteils besonders leicht erfaßbar.

Selbstverständlich ist es auch möglich, bereits zuvor manuell, automatisch oder rechnergesteuert gesondert aufgenommene Meßwerte erfindungsgemäß zu bearbeiten.

Die Erfindung wird im folgenden anhand eines bevorzugten Ausführungsbeispiels, das ein Verfahren zur Erfassung, Auswertung und Darstellung von Meßwerten aus der geometrischen Vermessung von Fahrzeug-Karosseriebauteilen beschreibt, näher erläutert. Das erfindungsgemäße Verfahren kann natürlich auch zur Erfassung, Auswertung und Darstellung von Meßwerten anderer Objekten bzw. Prozesse eingesetzt werden.

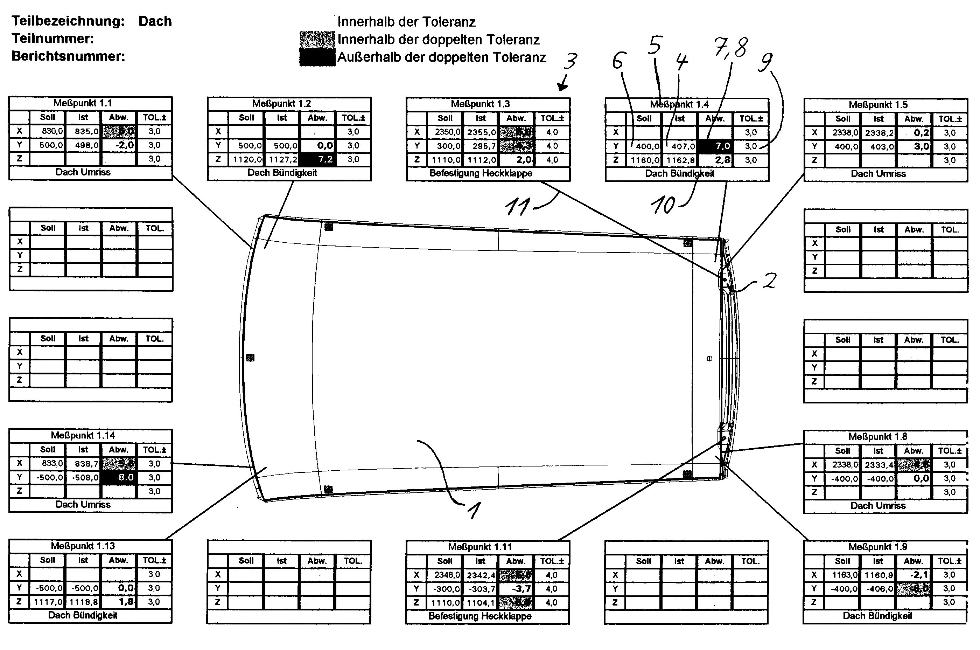

Die einzige Figur der Anmeldung zeigt ein Bildschirmbild zur Darstellung von Meßwerten, wie es bei diesem bevorzugten Ausführungsbeispiel der Erfindung typischerweise rechnergesteuert erzeugt wird.

Bestandteil des Bildschirmbildes ist eine symbolische graphische Darstellung 1 des zu vermessenden Objekts, in diesem Fall eines Dachteiles einer Fahrzeugkarosserie. An diesem Karosseriebauteil sind verschiedene Meßstellen 2 vorgesehen, die ebenfalls in der graphischen Darstellung verzeichnet sind. An jeder dieser Meßstellen 2 (im Ausführungsbeispiel durch 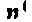 Meßpunkt" und die Meßstellennummer benannt) werden ein oder mehrere Meßwerte 4 gewonnen, die für die jeweiligen Meßstellen 2 jeweils mit x, y, z benannt sind. Diese Meßwerte 4 werden in der Figur in der Spalte 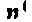 Ist" der Tabellenblöcke 3 abgelegt, da sie die tatsächlichen Istwerte darstellen. Jedem Meßwert 4 ist ein im Rechner gespeicherter Sollwert 6 zugeordnet, der in der Figur jeweils in der Spalte 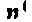 Soll" in den Tabellenblöcken 3 neben dem jeweiligen Meßwert 4 der jeweiligen Meßstelle 2 angezeigt wird. Aus der Differenz von Sollwert 6 und Meßwert (Istwert) 4 wird als Vergleichswert 7 eine Differenz 8 (in der Figur mit 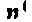 Abw." für 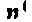 Abweichung" benannt) berechnet, die ebenfalls in der graphischen Darstellung angezeigt wird. Weiterhin ist für jeden Meßwert 4 ein Toleranzbereich vorgesehen, der in der Figur durch die maximal zulässige, d.h. maximal noch tolerierte Abweichung angegeben wird (Spalten 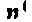 TOL.±" für die maximalen Toleranzen 9 in den Tabellenblöcken 3 der Figur).

Wie der Figur entnehmbar ist, sind die einer gemeinsamen Meßstelle 2 am Fahrzeug-Dachteil zugeordneten Meßwerte 4 jeweils in einem Tabellenblock 3 zusammengefaßt. Dieser Tabellenblock 3 enthält die Benennung 5 dieser Meßstelle 2, die der Meßstelle 2 zugeordneten Meßwerte (Istwerte) 4, Sollwerte 6, Differenzen 8 (als Vergleichswerte 7) und Toleranzen 9 sowie eine Kommentierung 10 zu dieser Meßstelle 2. Jeder Tabellenblock 3 ist durch eine Zuordnungsgerade 11 mit der zugehörigen Meßstelle 2 an der graphischen Darstellung 1 des Karosserie-Dachteils verbunden, so daß für den Betrachter sofort erkennbar wird, welcher Meßstelle 2 die entsprechenden Werte im jeweiligen Tabellenblock 3 zuzuordnen sind.

Die in der Spalte 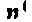 Abw." verzeichneten Differenzen 8 sind in Spaltenfeldern der Tabellenblöcke 3 eingetragen, die jeweils farblich unterlegt sind. Dies soll im folgenden anhand der Meßstelle mit der Benennung 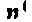 Meßpunkt 1.3", die eine Befestigungsstelle der Heckklappe am Dachte betrifft, näher erläutert werden. Dieser Meßpunkt 1.3 weist drei Meßwerte 4 (Istwerte) für die x-, y- und z-Koordinate dieses Meßpunkts Nr. 1.3 auf. Der Meßpunkt Nr. 1.3 hat in dem Ausführungsbeispiel die x-Koordinate (Meßwert 4) 2355,0; der Sollwert 6 beträgt 2350,0. Die Differenz 8 beträgt demgemäß +5,0. Bei einer vorgegebenen Toleranz 9 von ± 4,0 um den Sollwert 6 liegt der Meßwert 4 von 2355,0 daher außerhalb des vorgegebenen Toleranzbereichs, aber noch innerhalb des Doppelten der maximalen zulässigen Toleranz 9 von ± 4,0. Demgemäß wird der ermittelte Vergleichswert 7 für die x-Koordinate von +5,0 nach der hier verwendeten Färbungsfestlegung gelb gefärbt. Liegt nämlich der Vergleichswert 7 innerhalb des vorgegebenen Toleranzbereichs um den Sollwert 6, so wird bei dem Ausführungsbeispiel das Anzeigefeld des Vergleichswert 7 grün unterlegt; weicht der Vergleichswert 7 um mehr als das Einfache, aber weniger als das Doppelte der maximalen vorgegebenen Toleranz 9 vom Sollwert 6 ab, so wird dem Darstellungsfeld des Vergleichswertes 7 die Farbe Gelb zugeordnet; einem Vergleichswert 7, der um mehr als das Doppelte der maximalen vorgegebenen Toleranz 9 vom Sollwert 6 abweicht, wird der Farbwert Rot zugeordnet.

Dementsprechend wird die Differenz 8 (+2,0) des Meßwertes 4 (1112,0) vom Sollwert 6 (1110,0) der z-Koordinate des Meßpunkts Nr. 1.3 in einem grün unterlegten Feld des Tabellenblocks 3 dargestellt, da die Differenz 8 von +2,0 innerhalb der vorgegebenen maximalen Toleranz 9 von ± 4,0 liegt. Die Differenz 8 (+7,0) des Meß- bzw. Istwerts 4 (407,0) vom Sollwert 6 (400,0) der y-Koordinate des Meßpunkts Nr. 1.4 (betrifft Dach-Bündigkeit) wird hingegen rot hinterlegt, da die festgestellte Differenz 8 von +7,0 die maximal zugelassene Toleranz 9 von ± 3,0 um mehr als das Doppelte überschreitet.

Anhand der Farbunterlegungen der Felder für die Differenzen 8 der Tabellenblöcke 3 kann der Betrachter auf dem Rechnerbildschirm mit einem Blick sofort feststellen, welche gemessenen Koordinaten welcher Meßstellen 2 sich innerhalb der zulässigen Toleranz 9 bewegen (grün gefärbt), welche leicht außerhalb liegen (gelb gefärbt) und welche kritisch (nämlich um mehr als das Zweifache) außerhalb der maximalen zulässigen Toleranz 9 liegen (rot gefärbt). Beim Vergleich verschiedener derartiger Bilder, wie sie in der Figur gezeigt sind, sind auf diese Weise Vergleiche und Trends leicht abzulesen.

Das erfindungsgemäße Verfahren kann leicht derart erweitert werden, daß die Meßwerte 4 verschiedener vermessener Dachteile miteinander verglichen werden. Dazu werden beispielsweise die Differenzen 8 und gegebenenfalls auch die jeweiligen Meßwerte 4 in Tabellenform für verschiedene vermessene Dachteile gleichzeitig auf dem Rechnerbildschirm dargestellt. Durch die unterschiedlichen Einfärbungen der Tabellenfelder der Differenzen 8 - in Abhängigkeit von den vorgegebenen Toleranzen 9 - können Meßwerttrends, kritische Meßstellen 2 usw. leicht erkannt werden.

Das erfindungsgemäße Verfahren läuft bei dem bevorzugten Ausführungsbeispiel wie folgt ab:

Das zu vermessende Dachte wird in die Teileaufnahme einer Koordinatenmeßmaschine eingespannt. Anschließend werden die aufzunehmenden Meßwerte 4 an den verschiedenen Meßstellen 2 des Karosserie-Dachteils gemessen. Die Meßwerte 4 können beispielsweise auf einem Datenträger abgespeichert werden, und zwar zusammen mit einem Zuordnungscode, der die Meßwerte 4 den jeweiligen Koordinaten der Meßstelle 2 zuordnet. Die von der rechnergesteuerten Koordinatenmeßmaschine gemessenen und auf dem Datenträger abgespeicherten Meßwerte 4 werden sodann mittels dieses Datenträgers in einen Auswerte- und Darstellungsrechner eingelesen, in dem die zugeordneten Sollwerte 6 und Toleranzen 9 für die jeweiligen Koordinaten 4 der jeweiligen Meßstellen 2 gespeichert sind. In diesem Auswerte- und Darstellungsrechner werden die Differenzen 8 zwischen den Meßwerten 4 und Sollwerten 6 berechnet, mit den gespeicherten Toleranzen 9 verglichen und es wird die Darstellung auf einem Auswertebildschirm berechnet, wobei die Einfärbung der Tabellenfelder der Differenzen 8 gemäß der oben beschriebenen Einfärbungsregel festgelegt wird. Selbstverständlich ist es auch möglich, die gewonnenen Meßwerte 4 direkt oder über eine Übertragungsleitung (z. B. per Modem) vom Steuerrechner der Koordinatenmeßmaschine in den Auswerte- und Darstellungsrechner zu übertragen.

Darüber hinaus ist es auch möglich, daß eine Datenverarbeitungseinrichtung sowohl die Koordinatenmeßmaschine steuert, als auch die Weiterverarbeitung und Darstellung der Meßwerte 4 und ihrer zugehörigen Daten übernimmt. Dies kann auch online während des Messens geschehen. Beispielsweise könnte ein Bediener durch Auswahl des zu vermessenden Karosseriebauteils aus einer Bauteileliste dann auch gleichzeitig das Meßprogramm der Koordinatenmeßmaschine auswählen. Beispielsweise würde bei der Auswahl des Teiles 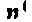 Dach" aus einer Teileliste die Koordinatenmeßmaschine dann das Meßprogramm für ein Dachteil ausführen, während bei der Auswahl eines Teiles 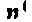 Cockpitmodul" die Koordinatenmeßmaschine die Vermessung einer Instrumententafel starten würde. Der Meßverlauf kann online dargestellt werden, so daß zu Beginn des Steuerprogramms ein Darstellungsbild ähnlich der Figur auf dem Rechnerbildschirm erscheinen würde, in dem die Felder 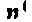 Ist" und 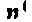 Abw." der Tabellenblöcke 3 für die verschiedenen Meßstellen 2 noch leer wären. Im Verlaufe des Abarbeitens des Meß- und Steuerprogramms der Koordinatenmeßmaschine durch die Datenverarbeitungseinrichtung würden die jeweiligen Meßwerte (Istwerte) 4 Schritt für Schritt ermittelt, vom Meß- und Steuerprogramm in die Felder der Tabellenblöcke 3 eingetragen, die Differenzen 8 berechnet, in die jeweiligen Tabellenfelder 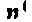 Abw." eingetragen und diese Tabellenfelder 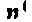 Abw." der Differenzen 8 entsprechend der verwendeten Einfärbungsregel farbig hinterlegt.

Selbstverständlich kann die Einfärbung nicht nur bei einer Darstellung auf einem Rechnerbildschirm erfolgen, sondern auch bei einer Darstellung auf einem Papierbild. Auch Einfärbungen z.B. durch verschiedenfarbige Hintergrundbeleuchtungen von alphanumerischen LCD-Anzeigen sind möglich.

## Patentansprüche

1. Verfahren zur Erfassung, Auswertung und Darstellung von Meßwerten (4), insbesondere zur geometrischen Vermessung von Fahrzeug-Karosseriebauteilen, dadurch gekennzeichnet, daß
- die Meßwerte (4) aufgenommen,
- mittels einer Datenverarbeitungseinrichtung mit zugeordneten gespeicherten Sollwerten (6) verglichen werden,
- anhand des Vergleichs jeweils ein Vergleichswert (7) gebildet wird, der ein Maß für die Abweichung des jeweiligen Meßwertes (4) vom Sollwert (6) ist und
- die Meßwerte (4) und/oder die Vergleichswerte (7) in alphanumerischer Form dargestellt werden,
- wobei der alphanumerischen Darstellung eines Meßwertes (4) und/oder eines Vergleichswertes (7) jeweils ein Farbwert in der Darstellung zugeordnet wird, der jeweils in Abhängigkeit von dem festgestellten Vergleichswert (7) gewählt wird.

2. Verfahren nach Anspruch (1), dadurch gekennzeichnet, daß der Vergleichswert (7) die Differenz (8) zwischen dem Sollwert (6) und dem Meßwert (4) ist.

3. Verfahren nach Anspruch (1), dadurch gekennzeichnet, daß der Vergleichswert (7) das Verhältnis zwischen dem Sollwert (6) und dem Meßwert (4) ist.

4. Verfahren nach einem der vorhergehenden Ansprüche, dadurch gekennzeichnet, daß die Zuordnung des Farbwertes in der Darstellung dadurch geschieht, daß die alphanumerische Darstellung des Meßwertes (4) und/oder des Vergleichswertes (7) ganz oder teilweise mit der zugeordneten Farbe flächig unterlegt wird.

5. Verfahren nach einem der vorhergehenden Ansprüche, dadurch gekennzeichnet, daß die Zuordnung des Farbwertes in der Darstellung dadurch geschieht, daß die Zeichen zur alphanumerischen Darstellung des Meßwertes (4) und/oder des Vergleichswertes (7) ganz oder teilweise mit der zugeordneten Farbe farbig gewählt werden.

6. Verfahren nach einem der vorhergehenden Ansprüche, dadurch gekennzeichnet, daß der alphanumerischen Darstellung des Vergleichswertes (7) jeweils ein Farbwert in der Darstellung zugeordnet wird, der jeweils in Abhängigkeit von dem festgestellten Vergleichswert (7) gewählt wird.

7. Verfahren nach einem der vorhergehenden Ansprüche, dadurch gekennzeichnet, daß der zugeordnete Farbwert eine Farbe im umgangssprachlichen Sinne ist.

8. Verfahren nach einem der vorhergehenden Ansprüche, dadurch gekennzeichnet, daß der alphanumerischen Darstellung eines Meßwertes (4) und/oder eines Vergleichswertes (7), der innerhalb eines vorgegebenen gespeicherten Toleranzbereichs um den zugeordneten Sollwert (6) liegt, ein bestimmter Farbwert in der Darstellung zugeordnet wird und der alphanumerischen Darstellung eines Meßwertes (4) und/oder eines Vergleichswertes (7), der außerhalb dieses vorgegebenen Toleranzbereichs (7) um den Sollwert (6) liegt, ein oder mehrere andere, abweichende Farbwerte in der Darstellung zugeordnet werden.

9. Verfahren nach Anspruch 8, dadurch gekennzeichnet, daß einem Meßwert (4) und/oder einem Vergleichswert (7), der außerhalb des vorgegebenen Toleranzbereichs um den Sollwert (6) liegt, aber nicht mehr als das Doppelte der maximalen vorgegebenen Toleranz (9) vom Sollwert (6) abweicht, ein bestimmter Farbwert in der Darstellung zugeordnet wird, während einem Meßwert (4) und/oder einem Vergleichswert (7), der um mehr als das Doppelte von der maximalen vorgegebenen Toleranz (9) vom Sollwert (6) abweicht, ein anderer, abweichender Farbwert in der Darstellung zugeordnet wird.

10. Verfahren nach Anspruch 9 in Verbindung mit Anspruch 7, dadurch gekennzeichnet, daß einem Meßwert (4) und/oder einem Vergleichswert (7), der innerhalb des vorgegebenen Toleranzbereichs um den Sollwert (6) liegt, die Farbe Grün in der Darstellung zugeordnet wird, einem Meßwert (4) und/oder einem Vergleichswert (7), der mehr als das Einfache, aber weniger als das Doppelte der maximalen vorgegebenen Toleranz (9) vom Sollwert (6) abweicht, die Farbe Gelb zugeordnet wird, während einem Meßwert (4) und/oder Vergleichswert (7), der um mehr als das Doppelte der maximalen vorgegebenen Toleranz (9) vom Sollwert (6) abweicht, der Farbwert Rot zugeordnet wird.

11. Verfahren nach einem der vorhergehenden Ansprüche, dadurch gekennzeichnet, daß eine Gruppe von Meßwerten, insbesondere die einer gemeinsamen Meßstelle am Fahrzeug-Karosseriebauteil zugeordneten Meßwerte, gegebenenfalls mit den Vergleichswerten zusammengefaßt, insbesondere als Tabellenblock (3) zusammengefaßt, dargestellt werden.

12. Verfahren nach einem der vorhergehenden Ansprüche, dadurch gekennzeichnet, daß das Objekt bzw. der Prozeß, dem die aufgenommenen Meßwerte zugehörig sind, gleichzeitig mit der alphanumerischen Darstellung der Meßwerte (4) und/oder der Vergleichswerte (7) graphisch dargestellt wird (1).

13. Verfahren nach einem der vorhergehenden Ansprüche, dadurch gekennzeichnet, daß das Verfahren vollständig rechnergesteuert abgearbeitet wird.

14. Verfahren nach Anspruch 13, dadurch gekennzeichnet, daß die alphanumerische Darstellung des Meßwertes (4) und/oder Vergleichswertes (7) auf einem Bildschirm erfolgt.

15. Datenträger, enthaltend eine Steuerprogramm für eine Datenverarbeitungseinrichtung zur Auswertung und Darstellung von Meßwerten (4), insbesondere zur geometrischen Vermessung von Fahrzeug-Karosseriebauteilen, dadurch gekennzeichnet, daß
- die aufgenommenen Meßwerte (4) mit zugeordneten gespeicherten Sollwerten (6) verglichen werden,
- anhand des Vergleichs jeweils ein Vergleichswert (7) gebildet wird, der ein Maß für die Abweichung des jeweiligen Meßwertes (4) vom Sollwert (6) ist und
- die Meßwerte (4) und/oder die Vergleichswerte (7) in alphanumerischer Form dargestellt werden,
- wobei der alphanumerischen Darstellung eines Meßwertes (4) und/oder eines Vergleichswertes (7) jeweils ein Farbwert in der Darstellung zugeordnet wird, der jeweils in Abhängigkeit von dem festgestellten Vergleichswert (7) gewählt wird.

16. Datenträger nach Anspruch 15, dadurch gekennzeichnet, daß der Datenträger zusätzlich eine Steuerprogrammeinheit zur Aufnahme der Meßwerte (4) enthält.

17. Datenträger nach Anspruch 15 oder 16, dadurch gekennzeichnet, daß das Steuerprogramm nach einem der Ansprüche 2 bis 14 weitergebildet ist.
